# EUROPÄISCHE PATENTSCHRIFT

(11) **EP 1 493 320 B1**
(45) Veröffentlichungstag und Bekanntmachung des Hinweises auf die Patenterteilung: **01.08.2007**
(21) Anmeldenummer: 04014294.5
(22) Anmeldetag: 18.06.2004
(51) Int. Cl.: A01D 78/10

(54) **Heuwerbungsmaschine**
Haymaking machine
Machine de fenaison

(30) Priorität: 20.06.2003 DE 10327883
(43) Veröffentlichungstag der Anmeldung: 05.01.2005
(73) Patentinhaber: Maschinenfabrik Bernard Krone GmbH, 48480 Spelle (DE)
(72) Erfinder: Krone, Bernard, Dr.-Ing. E. h., 48480 Spelle (DE); Horstmann, Josef, Dr.-Ing., 49479 Ibbenbüren (DE)

(56) Entgegenhaltungen:
- EP-A- 0 664 948
- EP-A- 0 958 731
- EP-A- 1 433 372
- DE-A- 3 831 186
- DE-A- 4 111 267
- DE-A- 19 820 930

## Beschreibung

Die Erfindung bezieht sich auf eine Heuwerbungsmaschine, insbesondere zum Schwaden von landwirtschaftlichem Halmgut, mit vier umlaufend angetriebenen und über Stützräder auf dem Erdboden abstützbaren Kreiselrechen, die jeweils über einen an einem Tragrahmen der Heuwerbungsmaschine angeordneten Ausleger um eine Schwenkachse aus einer Arbeits- und Betriebsstellung in eine Transportstellung verschwenkbar sind.

Eine Heuwerbungsmaschine der vorgenannten Art ist beispielsweise aus der DE 197 16 379 C1 bekannt. Bei dieser Maschine sind vier Kreiselrechen vorgesehen, wobei zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer ungelenkten Maschinenachse gelegen. Zur Überführung in ihre Transportstellung oder zum Rangieren sind die jeweiligen Kreiselrechen einwärts zu verschwenken. Insbesondere im Bereich des Vorgewendes kann es erforderlich sein, die Kreiselrechen einer Seite oder beider Seiten vom Erdboden so weit abzuheben, dass während des Wendens der Heuwerbungsmaschine im Vorgewende bereits in einem Schwad liegendes Halmgut nicht verwirbelt wird. Nachteilig an dieser Heuwerbungsmaschine ist, dass durch das Anheben der Kreiselrechen, insbesondere an nur einer Maschinenseite, die Fahrstabilität der Heuwerbungsmaschine deutlich verschlechtert ist und eine hohe Kippgefahr besteht. Das Wenden muss daher sehr vorsichtig und langsam durchgeführt werden.

Ein weiterer Nachteil besteht darin, dass das Gewicht des Auslegers auf den Kreiselrechen bzw. auf dessen Stützräder drückt. Insbesondere bei einem stark welligen oder hügeligen Untergrund kann der vertikale Abstand zwischen der Befestigung des Auslegers am Tragrahmen und der Befestigung des Kreiselrechens am Ausleger erheblich variieren. Hierdurch verändert sich auch die auf den Kreiselrechen einwirkende Gewichtskraft des Auslegers und damit die Auflagekraft des Kreiselrechens auf den Erdboden. Dabei kann die Auflagekraft auf dem Erdboden sowohl zu stark als auch zu gering sein. Das Arbeitsverhalten der Kreiselrechen wird hierdurch negativ beeinträchtigt.

Eine weitere aus der EP 0 958 731 A1 bekannt gewordene Heuwerbungsmaschine zum Versetzen von auf dem Boden liegendem Erntegut umfasst mindestens zwei Gruppen von mindestens zwei Rechkörpern, wobei die Gruppen in ähnlicher Weise wie die Kreiselrechen der zuvor beschriebenen DE 197 16 397 C1 hintereinander angeordnet sind und jeder Rechkörper jeweils am äußeren Ende eines schwenkbaren Auslegers angeordnet ist. Die Ausleger der die maximale Arbeitsbreite bestimmenden Rechkörper weisen im gezeigten Ausführungsbeispiel eine zusätzliche Schwenkachse auf, die den Ausleger unterteilt. Die oben beschriebenen nachteiligen Merkmale der aus der DE 197 16 397 C1 bekannten Maschine treffen jedoch ebenso für diese Maschine zu.

Es ist daher Aufgabe der vorliegenden Erfindung, eine Heuwerbungsmaschine der eingangs genannten Art mit größerer Arbeitsbreite zu schaffen, bei der dennoch die Fahrstabilität insbesondere während des Wendens bei angehobenen Kreiselrechen trotz kürzerer Wendezeit erhöht ist.

Zur Lösung dieser Aufgabe zeichnet sich die Heuwerbungsmaschine der eingangs genannten Art dadurch aus, dass der Ausleger eine weitere im wesentlichen horizontale Schwenkachse aufweist, die mit der ersten Schwenkachse einen Stützarm des Auslegers begrenzt und an die sich ein mit dem Kreiselrechen verbundener gegenüber dem Stützarm um die weitere Schwenkachse verschwenkbarer Endstützarm anschließt und dass zwischen der ersten Schwenkachse und der weiteren Schwenkachse ein Laufrad angeordnet ist.

Damit ist eine Heuwerbungsmaschine mit deutlich erhöhter Fahrstabilität und reduzierter Kippgefahr zur Verfügung gestellt. Um einen bereits gelegten Schwad, insbesondere im Bereich des Vorgewendes, nicht zu verwirbeln, wird nicht der gesamte Ausleger angehoben sondern lediglich der Endstützarm mit daran angeordnetem Kreiselrechen in die Höhe verschwenkt. Das Gewicht des vom Erdboden abgehobenen Kreiselrechens wird hierbei insbesondere von dem Laufrad getragen und nur teilweise auf den Tragrahmen übertragen. Hierdurch besteht auch dann keine Kippgefahr der Heuwerbemaschine, wenn alle Kreiselrechen einer Maschinenseite angehoben werden. Aufgrund der erheblich verbesserten Fahrstabilität in dieser Position des Auslegers ist ein weniger vorsichtiges und schnelleres Wenden möglich. Dadurch, dass der Endstützarm als ein Teilstück des Auslegers kürzer ist als der gesamte Ausleger, erfolgt das Verschwenken des Kreiselrechens in die Höhe deutlich schneller, so dass auch hierdurch die Zeit des Wendens der Heuwerbemaschine verkürzt werden kann.

Ein weiterer Vorteil der erfindungsgemäßen Heuwerbungsmaschine besteht darin, dass das Gewicht des Stützarms nicht mehr auf den Kreiselrechen bzw. auf dessen Stützräder drückt. Die Auflagekraft des Kreiselrechens ist daher selbst bei stark welligem oder hügeligem Erdboden und bei großem Abstand zum Tragrahmen stets gleichbleibend. Das Arbeitsverhalten des Kreiselrechens ist somit weitgehend unabhängig von der vertikalen Position des Tragrahmens.

Eine mögliche Ausgestaltung der Erfindung sieht vor, dass dem Ausleger ein Kraftspeicher z. B. in Form einer Zugfeder zugeordnet ist, der sich zwischen dem Tragrahmen und dem Ausleger erstreckt. In der Arbeits- und Betriebsstellung zieht oder drückt der Kraftspeicher den Ausleger permanent mit einem vorgebbaren Moment von dem Erdboden weg in die Höhe. Hierdurch wird einerseits die Auflagekraft des Auslegers auf dem Laufrad reduziert und andererseits das Fahrwerk der Heuwerbungsmaschine mit einer zusätzlichen Kraftkomponente in Richtung Erdboden gedrückt. Ein ausreichender Bodenkontakt des Fahrwerks der Heuwerbungsmaschine ist dadurch sichergestellt.

Besonders vorteilhaft ist die Ausgestaltung der erfindungsgemäßen Heuwerbungsmaschine mit sechs Kreiselrechen in in Fahrtrichtung im wesentlichen V-förmiger Anordnung. Damit sind Arbeitsbreiten von z. B. 20 Metern durchaus realisierbar. Um bei solch großen Arbeitsbreiten auch noch ein befriedigendes Heuwerbungsergebnis zu erzielen, sind die weiteren Kreiselrechen derart vorgesehen, dass - je nachdem, welche der vorgesehenen Maschinenachsen gelenkt oder ungelenkt ist - das jeweilige Abstandsmaß der Vertikallängsmittelachsen der beiden in Maschinenfahrtrichtung jeweils benachbarten Kreiselrechen, die entweder der ungelenkten Achse vor- oder der ungelenkten Achse nachgeordnet sind, geringer ist als das Abstandsmaß der Vertikallängsmittelachsen der anderen in Fahrtrichtung benachbarten Kreiselrechen. Ist beispielsweise in Maschinenfahrtrichtung ein Kreiselrechenpaar einer ungelenkten Maschinenachse nachgeordnet und die beiden anderen Kreiselrechenpaare dieser ungelenkten Maschinenachse vorgeordnet, so ist das Abstandsmaß der Vertikallängsmittelachsen dieser beiden in Maschinenfahrtrichtung der ungelenkten Maschinenachse vorgeordneten Kreiselrechen geringer als das Abstandsmaß der beiden anderen Kreiselrechen. Damit ist die Lage der Kreiselrechen zum Momentanpol der Maschine unter Berücksichtigung der Lenklaufeigenschaften derart vorgesehen, dass aufgrund der damit einhergehenden Überdeckungs- bzw. Überlappungsbereiche der wirksamen Bearbeitungsbereiche der Kreiselrechen auch bei Kurvenfahrten ein wirksames und sauberes Heuwerbungsergebnis zu erzielen ist. Dieses vorteilhafte Heuwerbungsergebnis ist auch zu erzielen, wenn der weitere Kreiselrechen in Abhängigkeit seines Durchmessers soweit an den nachgeordneten Kreiselrechen heranreicht, dass das kürzeste Abstandsmaß 0,1 bis 0,5 des Durchmessers des weiteren Kreiselrechens beträgt.

Die erfindungsgemäße Heuwerbungsmaschine ist bevorzugtermassen als selbstfahrende Heuwerbungsmaschine ausgebildet mit einer eigenen Fahrerkabine und einem eigenen motorischen Antrieb, wobei die beiden äußeren und damit die beiden weiteren Kreiselrechen der Fahrerkabine unmittelbar vor- oder nebengeordnet sind und die beiden in Fahrtrichtung dahinterliegenden Kreiselrechen unmittelbar hinter der Fahrerkabine liegen. Dabei sind die beiden weiteren Kreiselrechen - bezogen auf die Anbringung ihres jeweiligen Auslegers - am Maschinenrahmen in Fahrtrichtung nach hinten versetzt, so das sie in etwa neben der Fahrerkabine liegen und somit in Sichtweite des Fahrers arbeiten können, ohne dass dieser besondere aufwendige Bewegungen durchführen muss. Bevorzugtermassen ist die selbstfahrende Maschine mit einer vorderen gelenkten Maschinenachse versehen, so dass das Abstandsmaß der Vertikallängsmittelachsen der jeweiligen in Fahrtrichtung benachbarten Kreiselrechen der beiden in Fahrtrichtung vorderen Kreiselrechenpaare geringer ist, als das Abstandsmaß der Vertikallängsmittelachsen der jeweiligen Kreiselrechen des mittleren Kreiselrechenpaares und des in Fahrtrichtung hinteren Kreiselrechenpaares.

Alternativ kann die erfindungsgemäße Heuwerbungsmaschine aber auch als gezogene Heuwerbungsmaschine ausgebildet sein mit zweckmäßigerweise einer ungelenkten Maschinenachse zwischen dem mittleren Kreiselrechenpaar und dem in Fahrtrichtung hinteren Kreiselrechenpaar, wobei sich bezüglich des Abstandsmaßes der Vertikallängsmittelachsen der Kreiselrechen der beiden in Fahrtrichtung vorderen Kreiselrechenpaares analoges ergibt wie bei der zuvor beschriebenen selbstfahrenden Heuwerbungsmaschine.

Weitere Vorteile und Einzelheiten der Erfindung ergeben sich aus den Unteransprüchen und in den Zeichnungen schematisch dargestellten Ausführungsbeispielen, die im folgenden beschrieben werden; es zeigen:
- Fig. 1: eine Draufsicht einer als selbstfahrenden Maschine ausgebildeten Heuwerbungsmaschine in der Arbeits- und Betriebsstellung der Teile,
- Fig. 2: eine Vorderansicht auf die Heuwerbungsmaschine nach Fig. 1,
- Fig. 3: eine Ausschnittsvergrößerung eines vorderen Auslegers der Heuwerbungsmaschine nach Fig. 1 in dreidimensionaler Darstellung,
- Fig. 4: eine abgebrochene Ausschnittsvergrößerung nach der Linie Y der Fig. 3,
- Fig. 5: eine dreidimensionale Darstellung des Auslegers nach Fig. 3 in Transportstellung der Teile und
- Fig. 6: ein alternatives Ausführungsbeispiel einer als gezogene Maschine ausgebildeten Heuwerbungsmaschine in Draufsicht in der Arbeitsstellung der Teile.

In den Zeichnungen sind allgemein gleichwirkende Teile mit übereinstimmenden Bezugszeichen beziffert.

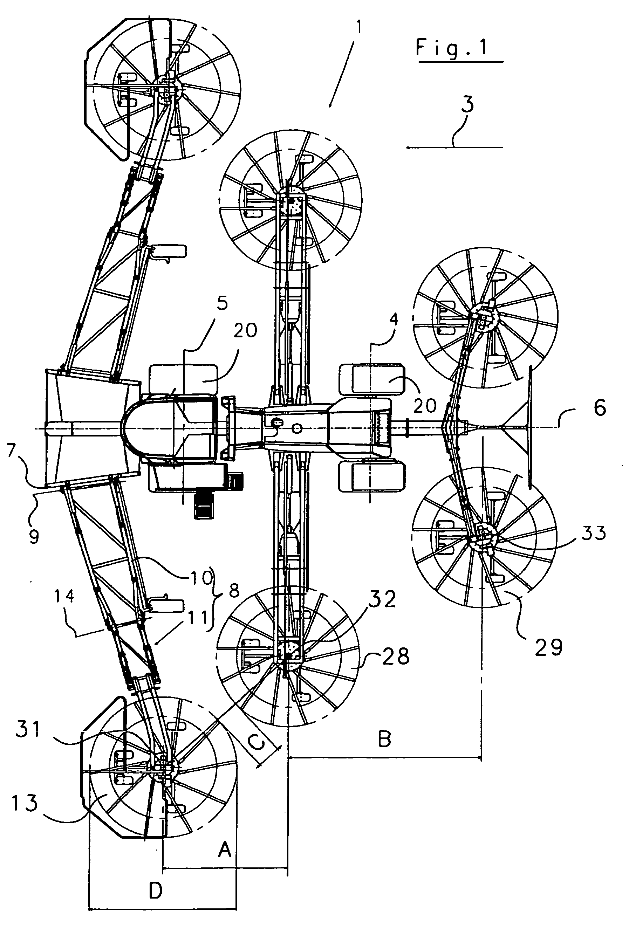

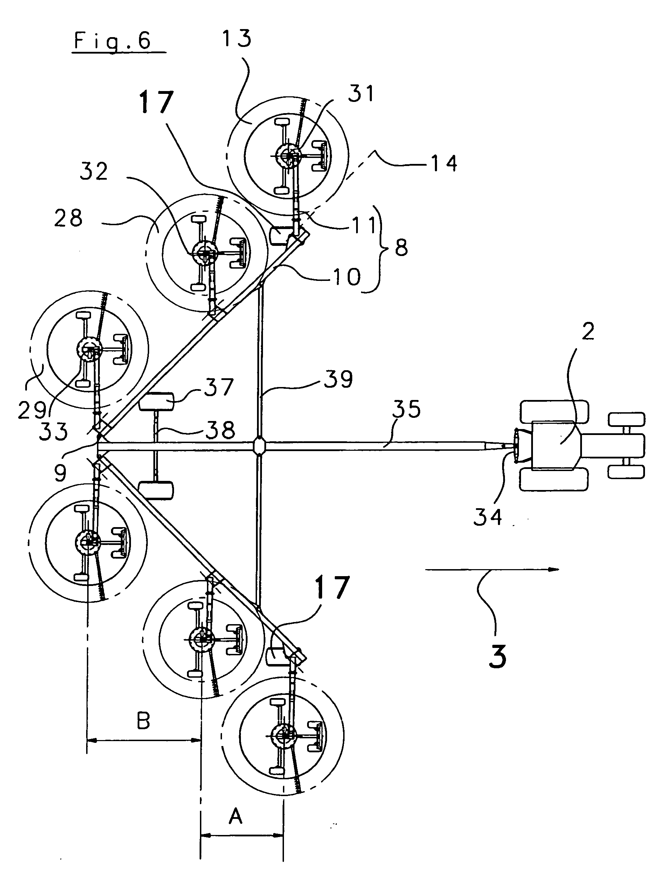

In den Zeichnungen ist allgemein mit 1 eine Heuwerbungsmaschine beziffert, die in den Ausführungsbeispielen nach den Fig. 1 bis 5 als selbstfahrende Heuwerbungsmaschine und in dem Ausführungsbeispiel nach der Fig. 6 als von einem landwirtschaftlichen Schlepper 2 gezogene Heuwerbungsmaschine ausgebildet ist. Die in den Fig. 1 bis 5 gezeigte selbstfahrende Heuwerbungsmaschine 1 hat eine in Fahrtrichtung 3 hintere ungelenkte Maschinenachse 4 sowie eine vordere gelenkte Maschinenachse 5 und - was im einzelnen näher aus der Darstellung nach Fig. 1 hervorgeht - eine Maschinenlängsmittelachse 6. Da die erfindungsgemäß wesentlichen Teile auf beiden Seiten der Heuwerbungsmaschine 1 spiegelsymmetrisch zur Maschinenlängsmittelachse 6 jeweils doppelt vorkommen, werden die Teile lediglich an einer Maschinenseite erklärt. Die Erläuterung ist jedoch auf die andere Maschinenseite übertragbar. An einem vor der gelenkten Maschinenachse 5 angeordneten Tragrahmen 7 ist ein Ausleger 8 schwenkbeweglich um eine erste Schwenkachse 9 befestigt. Der Ausleger 8 ist unterteilt in einen zum Tragrahmen 7 hin ersten als Stützarm 10 bezeichneten Bereich und in einen sich daran anschließenden als Endstützarm 11 bezeichneten weiteren Bereich, an dem endseitig ein Kreiselrechen 13 angeordnet ist.

Wie insbesondere aus der Zeichnung nach Fig. 1 hervorgeht, kann der Ausleger 8 derart an der Maschine angelenkt sein, dass er in der Arbeitsstellung unter einem spitzen Winkel zur Maschinenlängsachse 6 weist.

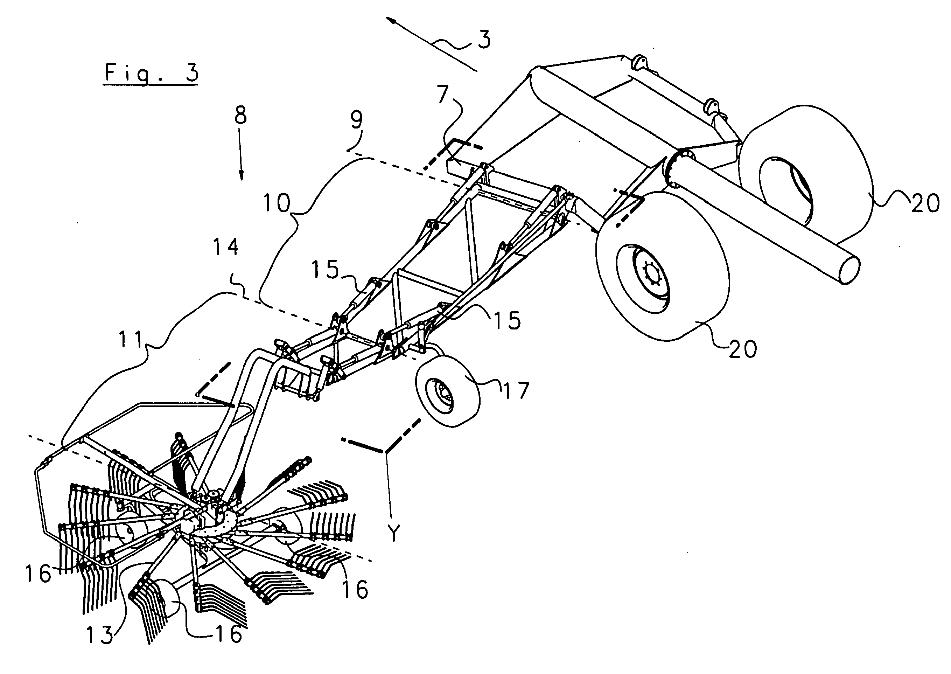

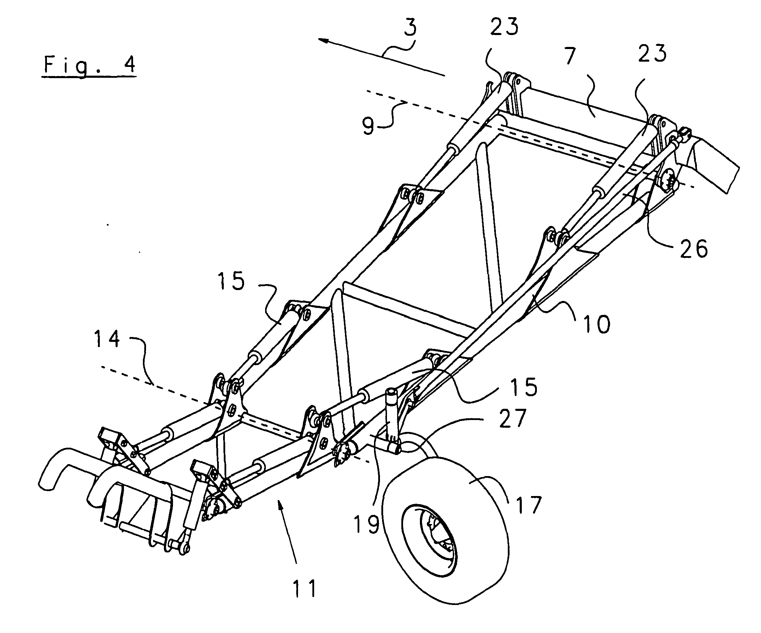

Der Ausleger 8 ist in einer Ausschnittsvergrößerung in dreidimensionaler Darstellung in den Fig. 3 und 4 dargestellt. Der Endstützarm 11 wird von dem Stützarm 10 durch eine weitere im wesentlichen horizontale Schwenkachse 14 getrennt und ist um diese weitere Schwenkachse 14 gegenüber dem Stützarm 10 verschwenkbar. Der Winkel zwischen dem Stützarm 10 und dem Endstützarm 11 ist über Stellvorrichtungen 15, z. B. Hydraulikzylinder, einstellbar. Der Kreiselrechen 13 ist auf nachlaufenden Stützrädern 16 abgestützt, die das Gewicht des Kreiselrechens 13 und einen Teil des Gewichts des Auslegers 8 tragen.

Zwischen der ersten 9 und der weiteren Schwenkachse 14 ist an dem Stützarm 10 ein Laufrad 17 vorzugsweise in der Nähe der weiteren Schwenkachse 14 angeordnet. Das Laufrad 17 ist dabei in Fahrtrichtung 3 gegenüber dem Ausleger 8 nachlaufend angeordnet und vorzugsweise ungelenkt. Eine dem Laufrad zugeordnete Federung mit einer Federhalterung19 gleicht von dem Laufrad 17 aufgenommene Unebenheiten des Erdbodens gegenüber dem Ausleger 8 aus.

Zum Anheben des Kreiselrechens 13 während der Feldarbeit, z. B. zum Wenden und Rangieren oder zum Überqueren bereits gelegter Schwade, ist der Kreiselrechen 13 durch ein Verschwenken des Endstützarms 11 gegenüber dem Stützarm 10 um die weitere Schwenkachse 14 in die Höhe verbringbar. Das Gewicht des Endstützarms 11 und des Kreiselrechens 13 lastet dabei überwiegend auf dem Laufrad 17. Um zu verhindern, dass die Räder 20 des Fahrgestells der Heuwerbungsmaschine 1, insbesondere in dieser Stellung der Ausleger 8, zu wenig Kontakt mit dem Erdboden haben und dadurch schlecht lenkbar sind oder den Antrieb der Heuwerbungsmaschine 1 nur unzureichend auf den Erdboden übertragen, kann zwischen dem Tragrahmen 7 und dem Ausleger 8 ein Kraftspeicher angeordnet sein. Dieser bewirkt, dass in der Arbeits- und Betriebsstellung an dem Ausleger 8 ein die Auflagekraft auf dem Laufrad 17 reduzierendes Moment angreift. Hierdurch wirkt eine von dem Tragrahmen 7 auf die Räder 20 der Heuwerbungsmaschine 1 übertragene Kraftkomponente in Richtung Erdboden. Die zwischen Tragrahmen 7 und Ausleger 8 wirkende Kraft des Kraftspeichers kann dabei permanent gleichbleibend sein oder den jeweiligen relativen Positionen der Teile der Heuwerbungsmaschine 1 optimiert anpassbar sein. Ein ausreichender Kontakt der Räder 20 der Heuwerbungsmaschine 1 mit dem Erdboden ist damit bei jeder Feldbeschaffenheit und Position des Auslegers 8 bzw. Kreiselrechens 13 gegeben. Der Kraftspeicher kann z. B. als Zugfeder ausgebildet sein. Diese kann beispielsweise innerhalb einer Kolben-ZylinderVorrichtung 23 angeordnet sein. In den vorliegenden Zeichnungen ist die Zugfeder nicht dargestellt.

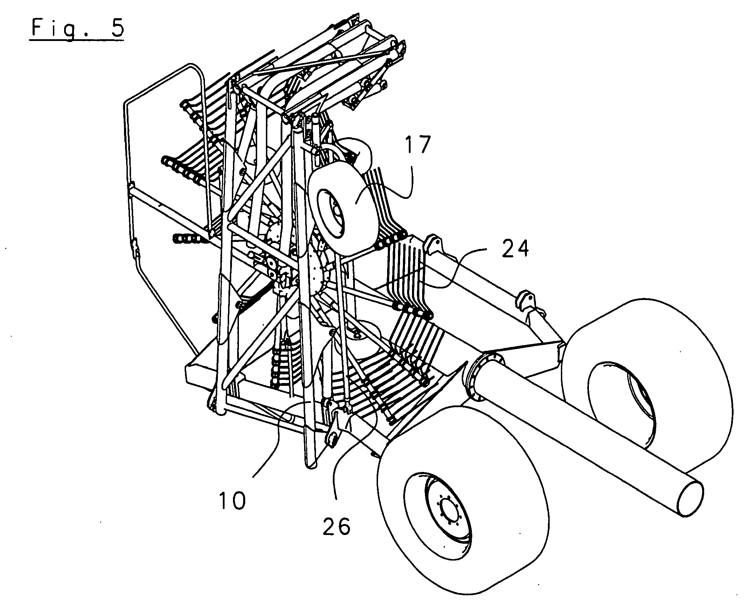

Zum Verbringen des Kreiselrechens 13 und des Auslegers 8 von der Arbeits- und Betriebsstellung in die Transportstellung wird der Kreiselrechen 13 während des Einwärtsklappens der Bestandteile des Auslegers 8 um insgesamt 270° verschwenkt. In der in Fig. 5 dargestellten Transportstellung des Auslegers 8 und des Kreiselrechens 13 nehmen diese eine paketartige Form mit im Inneren geschützt ruhenden Rechzinken 24 an. Das Laufrad 17 ist hierbei von einer zum Stützarm 10 im wesentlichen senkrechten Position in der Arbeits- und Betriebsstellung in eine im wesentlichen parallele Position der Transportstellung verschwenkbar. Das Verschwenken erfolgt mit Hilfe einer in Fig. 4 zu sehenden Schwenkeinrichtung 26. Während des Hochschwenkens des Stützarms 10 um die erste Schwenkachse 9 wird das Laufrad 17 um eine Einschwenkachse 27 zum Stützarm 10 einwärts gedreht.

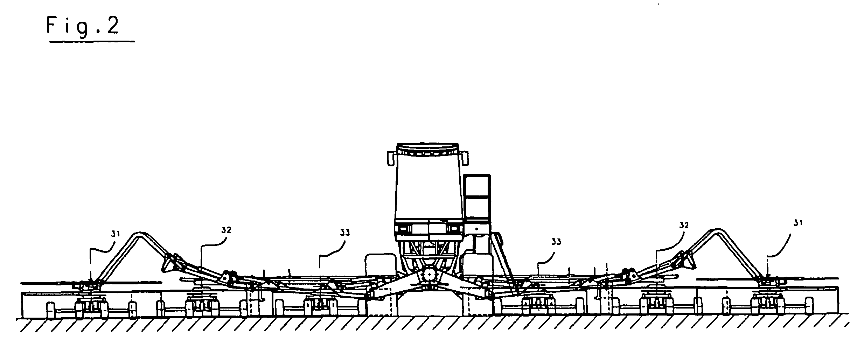

In dem in Fig. 1 und 2 gezeigten Ausführungsbeispiel sind in in Fahrtrichtung 3 V-förmiger Anordnung mittlere Kreiselrechen 28 und diesen Kreiselrechen 28 in Fahrtrichtung 3 nachgeordnete hintere Kreiselrechen 29 vorgesehen. Um die Arbeitsbreite der Heuwerbungsmaschine 1 noch weiter zu vergrößern, sind in Fahrtrichtung 3 den mittleren Kreiselrechen 28 zwei weitere Kreiselrechen 13 vorgeordnet, so dass sich insgesamt eine Maschine ergibt mit insgesamt drei Kreiselrechenpaaren 13, 28 und 29 mit sechs Kreiselrechen.

Um trotz dieser enormen Arbeitsbreite auch bei Kurvenfahrten ein optimales Schwadergebnis zu erreichen, sind die Kreiselrechen 13, 28 und 29 konstruktiv in besonderer Weise aufeinander abgestimmt bzw. einander angepasst. So sind die in Fahrtrichtung 3 vordersten und mithin weiteren Kreiselrechen 13 mit einem in Fahrtrichtung 3 nach hinten versetzten Abstandsmaß in der Arbeits- und Betriebsstellung vorgesehen, so dass der Abstand A der vertikalen Längsmittelachse 31 des vordersten weiteren Kreiselrechens 13 zur vertikalen Längsmittelachse 32 des in Fahrtrichtung 3 benachbarten Kreiselrechens 28 geringer ist als das Abstandsmaß B der vertikalen Längsmittelachse 32 dieses Kreiselrechens 28 zu der vertikalen Längsmittelachse 33 von dem in Fahrtrichtung 3 nachgeordneten Kreiselrechen 29. Bei Einhaltung dieser Parameter ist bei einer Heuwerbungsmaschine 1 mit sechs Kreiselrechen und der enormen Arbeitsbreite ein optimales Schwadergebnis auch bei Kurvenfahrten zu erreichen. Zusätzlich oder alternativ kann der weitere Kreiselrechen 13 so an den nachgeordneten Kreiselrechen 28 heranreichen, dass das kürzeste Abstandsmaß C 0,1 bis 0,5 des Durchmessers D des weiteren Kreiselrechens ist.

In dem Ausführungsbeispiel nach der Fig. 6 ist die Heuwerbungsmaschine 1 als eine von einem landwirtschaftlichen Schlepper 2 gezogene Maschine ausgebildet. Sie ist dort an die übliche Dreipunkthydraulik 34 des Schleppers 2 über einen Maschinenrahmen 35 anzubinden, der über Räder 37 einer ungelenkten Maschinenachse 38 auf dem Erdboden abstützbar ist. Auch hier ist der Ausleger 8 in einen um eine erste Schwenkachse 9, Stützarm 10 und einen um eine zweite im wesentlichen horizontale Schwenkachse 14 verschwenkbaren Endstützarm 11 unterteilt. Das Laufrad 17 befindet sich an dem Stützarm 10 in der Nähe der weiteren Schwenkachse 14. Die wiederum mit 13, 28 und 29 bezifferten Kreiselrechen sind ebenfalls über Stützräder 16 auf dem Erdboden abstützbar und haben Rechzinken 24, die jeweils um die vertikalen Längsmittelachsen 31, 32 und 33 rotieren. Auch hier ist das Abstandsmaß A der jeweiligen Längsmittelachen 31 und 32 der beiden in Fahrtrichtung 3 der ungelenkten Achse 38 vorgeordneten Kreiselrechen 13 und 28 geringer als das Abstandsmaß B der Vertikallängsmittelachsen 32 und 33 der beiden anderen Kreiselrechen 28 und 29. Die Kreiselrechen 13, 28 und 29 ihrerseits sind an einwärts und auswärts schwenkbar gehaltenen Auslegern 8 abgestützt, die an dem Maschinenrahmen 35 befestigt sind. Über diese Ausleger 8 und bewegliche an dem Maschinenrahmen 35 verschwenkbare Streben 39 können die Ausleger 8 mit samt den Kreiselrechen 13, 28 und 29 einwärts verschwenkt werden.

## Patentansprüche

1. Heuwerbungsmaschine, insbesondere zum Schwaden von landwirtschaftlichem Halmgut, mit vier umlaufend angetriebenen und über Stützräder (16) auf dem Erdboden abstützbaren sowie über jeweils einen Ausleger aus einer Arbeitsstellung in eine verschwenkte Transportstellung überführbaren Kreiselrechen (28,29) in in Fahrtrichtung im wesentlichen V-förmiger Anordnung, wobei den Kreiselrechen (28,29) zumindest ein weiterer, die maximale Arbeitsbreite vergrößernder Kreiselrechen (13) am Ende eines weiteren verschwenkbaren Auslegers (8) beigeordnet ist, und der Ausleger (8) an seinem zur Längsmittelachse (5) der Maschine weisendem Ende eine am Fahrzeugchassis vorgesehene Schwenkachse (9) und eine weitere im wesentlichen horizontale Schwenkachse (14) aufweist, die mit der ersten Schwenkachse (9) einen Stützarm (10) des Auslegers (8) begrenzt und an die sich ein mit dem Kreiselrechen (13) verbundener, gegenüber dem Stützarm (10) um die weitere Schwenkachse (14) verschwenkbarer Endstützarm (11) anschließt, wobei zwischen der ersten Schwenkachse (9) und der weiteren Schwenkachse (14) ein die Fahrstabilität erhöhendes und die Kippgefahr der Heuwerbungsmaschine reduzierendes Laufrad (17) angeordnet ist.

2. Heuwerbungsmaschine nach Anspruch 1, **dadurch gekennzeichnet, dass** das Laufrad (17) in einer Arbeitsfahrtrichtung hinter dem Ausleger (8) angeordnet ist.

3. Heuwerbungsmaschine nach einem der Ansprüche 1 oder 2, **gekennzeichnet durch** eine Schwenkeinrichtung (26), die bei Einschwenken des Auslegers (8) am Tragrahmen (7) das Laufrad (17) zum Ausleger (8) hin einschwenkt.

4. Heuwerbungsmaschine nach einem der Ansprüche 1 bis 3, **dadurch gekennzeichnet, dass** dem Ausleger (8) zumindest ein Kraftspeicher zugeordnet ist, der sich zwischen dem Tragrahmen (7) und dem Ausleger (8) erstreckt.

5. Heuwerbungsmaschine nach Anspruch 4, **dadurch gekennzeichnet, dass** der Kraftspeicher so angeordnet ist, dass in einer Arbeits- und Betriebsstellung an dem Ausleger (8) ein die Auflagekraft auf dem Laufrad (17) reduzierendes Moment angreift.

6. Heuwerbungsmaschine nach einem der Ansprüche 4 oder 5, **dadurch gekennzeichnet, dass** der Kraftspeicher als Zugfeder ausgeführt ist.

7. Heuwerbungsmaschine nach einem der Ansprüche 1 bis 6, **dadurch gekennzeichnet, dass** zwischen dem Stützarm (10) und dem Endstützarm (11) zumindest eine Stellvorrichtung (15) angeordnet ist, durch die der Winkel zwischen dem Stützarm (10) und dem Endstützarm (11) einstellbar ist.

8. Heuwerbungsmaschine nach Anspruch 7, **dadurch gekennzeichnet, dass** die Auflagekraft des Kreiselrechens (13) auf dem Erdboden durch die Stellvorrichtung (15) einstellbar ist.

9. Heuwerbungsmaschine nach einem der Ansprüche 7 oder 8, **dadurch gekennzeichnet, dass** die Stellvorrichtung (15) im wesentlichen von einem Hydraulikzylinder gebildet wird.

10. Heuwerbungsmaschine nach einem der Ansprüche 1 bis 9, **gekennzeichnet durch** eine das Laufrad (17) nachgiebig abstützenden Federung (19).

11. Heuwerbungsmaschine nach einem der Ansprüche 1 bis 10, **dadurch gekennzeichnet, dass** das Laufrad (17) nachlaufgelenkt ist.

12. Heuwerbungsmaschine nach einem der Ansprüche 1 bis 11, **dadurch gekennzeichnet, dass** vier Kreiselrechen (28, 29) in in Fahrtrichtung (3) im wesentlichen V-förmiger Anordnung zumindest zwei weitere, die maximale Arbeitsbreite bestimmende Kreiselrechen (13) in der Arbeits- und Betriebsstellung in Fahrtrichtung (3) vorgeordnet sind und dass das Abstandsmaß (A) der Vertikallängsmittelachsen (31,32) von zwei in Fahrtrichtung (3) hintereinander angeordneten sowie einer ungelenkten, mit Rädern (20) versehenen Maschinenachse (4) vor- oder nachgeordneten Kreiselrechen (13; 28) geringer ist, als das Abstandsmaß (B) der Vertikallängsmittelachsen (32, 33) der zwei in Fahrtrichtung (3) benachbart angeordneten Kreiselrechen (28, 29).

13. Heuwerbungsmaschine nach Anspruch 12, **dadurch gekennzeichnet, dass** das Abstandsmaß (A) der Vertikallängsmittelachsen (31, 32) der beiden in Fahrtrichtung (3) hintereinander angeordneten, der ungelenkten Maschinenachse (4) vor- oder nachgeordneten Kreiselrechen (13, 28) 40 bis 100 % des Abstandsmaßes (B) der Vertikallängsmittelachsen (32, 33) der beiden benachbarten Kreiselrechen (28, 29) beträgt.

14. Heuwerbungsmaschine nach einem der Ansprüche 12 oder 13, **dadurch gekennzeichnet, dass** die beiden weiteren Kreiselrechen (13) einer gelenkten Maschinenachse (5) in Fahrtrichtung (3) vorgeordnet sind.

15. Heuwerbungsmaschine nach einem der Ansprüche 1 bis 14, **dadurch gekennzeichnet, dass** die Heuwerbungsmaschine (1) als selbstfahrende Heuwerbungsmaschine ausgebildet ist.

16. Heuwerbungsmaschine nach Anspruch 15, **dadurch gekennzeichnet, dass** sich ein Kreiselrechenpaar (29) hinter einer ungelenkten Maschinenachse (4), ein weiteres Kreiselrechenpaar (28) zwischen der ungelenkten Maschinenachse (4) und einer gelenkten Maschinenachse (5) und zwei weitere Kreiselrechen (13) vor der gelenkten Maschinenachse (5) befinden.

17. Heuwerbungsmaschine nach einem der Ansprüche 1 bis 16, **dadurch gekennzeichnet, dass** der Ausleger (8) in der Arbeits- und Betriebsstellung unter einem spitzen Winkel zur Maschinenlängsmittelachse (6) ausgerichtet ist.

18. Heuwerbungsmaschine nach einem der Ansprüche 1 bis 17, **dadurch gekennzeichnet, dass** an jeder Maschinenseite in Fahrtrichtung (3) hintereinander angeordnete Kreiselrechen (13, 28, 29) jeweils an einem Ausleger (8) angeordnet sind, die an einem Maschinenrahmen (35) abstützbar sind und mit diesem einen spitzen Winkel in der Arbeits- und Betriebsstellung bilden und einwärts verschwenkbar sind.

19. Heuwerbungsmaschine nach einem der Ansprüche 1 bis 18, **dadurch gekennzeichnet, dass** das kürzeste Abstandsmaß C zwischen dem weiteren Kreiselrechen (13) und dem benachbarten Kreiselrechen (28) 10 % bis 50 % des Durchmessers D des weiteren Kreiselrechens (13) beträgt.

## Claims

1. Haymaking machine, particularly for windrowing stalked agricultural crops, having four rotary rakes (28, 29), substantially in a vee-shaped arrangement in the direction of travel, which are driven in rotation, which are able to be supported on the ground by means of supporting wheels (16), and which are able to be transferred by means of respective booms from a working position to a pivoted position for transport, the rotary rakes (28, 29) having associated with them at least one further rotary rake (13) which enlarges the maximum working width and is at the end of a further pivotable boom (8), and the boom (8) having, at its end which points towards the longitudinal centre axis (5) of the machine, an axis of pivot (9) which is provided on the chassis of the machine and having a further, substantially horizontal axis of pivot (14) which, with the first axis of pivot (9), defines the boundaries of a supporting arm (10) of the boom (8) and from which continues an end supporting arm (11) which is connected to the rotary rake (13) and which is pivotable about the further axis of pivot (14) relative to the supporting arm (10), a wheel for travel (17) which increases stability during travel and reduces the risk of the haymaking machine tipping being arranged between the first axis of pivot (9) and the further axis of pivot (14).

2. Haymaking machine according to claim 1, **characterised in that** the wheel for travel (17) is arranged behind the boom (8) in a working direction of travel.

3. Haymaking machine according to either of claims 1 and 2, **characterised by** a pivoting means (26) which, when the boom (8) is pivoted in on the supporting frame (7), pivots the wheel for travel (17) in towards the boom (8).

4. Haymaking machine according to one of claims 1 to 3, **characterised in that** the boom (8) has associated with it at least one means of storing force which extends between the supporting frame (7) and the boom (8).

5. Haymaking machine according to claim 4, **characterised in that** the means of storing force is so arranged that, in a working and operating position, a moment which reduces the force applied to the wheel for travel (17) is applied to the boom (8).

6. Haymaking machine according to either of claims 4 and 5, **characterised in that** the means of storing force is in the form of a traction spring.

7. Haymaking machine according to one of claims 1 to 6, **characterised in that** at least one positioning device (15) by which the angle between the supporting arm (10) and the end supporting arm (11) can be set is arranged between the supporting arm (10) and the end supporting arm (11).

8. Haymaking machine according to claim 7, **characterised in that** the force with which with the rotary rake (13) is applied to the ground can be set by the positioning device (15).

9. Haymaking machine according to either of claims 7 and 8, **characterised in that** the positioning device (15) is formed in essence by a hydraulic cylinder.

10. Haymaking machine according to one of claims 1 to 9, **characterised by** suspension (19) which supports the wheel for travel (17) in a yielding manner.

11. Haymaking machine according to one of claims 1 to 10, **characterised in that** the wheel for travel (17) is castor-steered.

12. Haymaking machine according to one of claims 1 to 11, **characterised in that** four rotary rakes (28, 29), substantially in a vee-shaped arrangement in the direction of travel (3), have positioned in front of them in the direction of travel (3), in the working and operating position, at least two further rotary rakes (13) which determine the maximum working width, and **in that** the spacing (A) between the vertical longitudinal centre axes (31, 32) of two rotary rakes (13, 28) which are arranged one behind the other in the direction of travel (3) and which are arranged in front of or behind an unsteered axle (4) of the machine which is provided with wheels (20) is less than the spacing (B) between the vertical longitudinal centre axes (32, 33) of the two rotary rakes (28, 29) which are arranged adjacent in the direction of travel (3).

13. Haymaking machine according to claim 12, **characterised in that** the spacing (A) between the vertical longitudinal centre axes (31, 32) of the two rotary rakes (13, 28) which are arranged one behind the other in the direction of travel (3) and which are arranged in front of or behind the unsteered axle (4) of the machine is 40 to 100% of the spacing (B) between the vertical longitudinal centre axes (32, 33) of the two adjacent rotary rakes (28, 29).

14. Haymaking machine according to either of claims 12 and 13, **characterised in that** the two further rotary rakes (13) are arranged in front of a steered axle (5) of the machine in the direction of travel (3).

15. Haymaking machine according to one of claims 1 to 14, **characterised in that** the haymaking machine (1) is in the form of a self-propelled haymaking machine.

16. Haymaking machine according to claim 15, **characterised in that** one pair of rotary rakes (29) is situated behind an unsteered axle (4) of the machine, a further pair of rotary rakes (28) is situated between the unsteered axle (4) of the machine and a steered axle (5) of the machine and two further rotary rakes (13) are situated in front of the steered axle (5) of the machine.

17. Haymaking machine according to one of claims 1 to 16, **characterised in that**, in the working and operating position, the boom (8) is aligned at an acute angle to the longitudinal centre axis (6) of the machine.

18. Haymaking machine according to one of claims 1 to 17, **characterised in that** rotary rakes (13, 28, 29) which are arranged one behind the other in the direction of travel (3) on each side of the machine are arranged on respective booms (8) which can be supported on a frame (35) of the machine and which form an acute angle therewith in the working and operating position and can be pivoted inwards.

19. Haymaking machine according to one of claims 1 to 18, **characterised in that** the shortest spacing C between the further rotary rake (13) and the adjacent rotary rake (28) is 10% to 50% of the diameter D of the further rotary rake (13).

## Revendications

1. Machine de fenaison, notamment pour andainer des produits agricoles en tiges, comportant quatre rotors râteleurs (28, 29) disposés pratiquement en forme de V dans la direction de déplacement, entrainés en rotation et s'appuyant sur le sol par des roues de sustentation (16) et pouvant être basculés d'une position de travail à une position de transport par l'intermédiaire d'une flèche,
les rotors râteleurs (28, 29) étant associés à au moins un autre rotor râteleur (13) augmentant la largeur maximale de travail, à l'extrémité d'une autre flèche pivotante (8) dont l'extrémité tournée vers l'axe longitudinal médian (5) de la machine, comporte un axe de pivotement sur le châssis du véhicule et un autre axe de pivotement (14) essentiellement horizontal, délimitant un bras d'appui (19) de la flèche (8) avec le premier axe de pivotement (9) et se poursuivant par un bras d'appui d'extrémité (11) relié au rotor râteleur (13), et basculant par rapport au bras d'appui (10) autour d'un autre axe de basculement (14),
une roue de roulement (17) augmentant la stabilité de circulation et réduisant le risque de basculement de la machine de fenaison étant prévue entre le premier axe de pivotement (9) et l'autre axe de pivotement (14).

2. Machine de fenaison selon la revendication 1,
**caractérisée en ce que**
la roue de roulement (17) est prévue derrière la flèche (8) selon la direction de déplacement de travail.

3. Machine de fenaison selon l'une des revendications 1 ou 2,
**caractérisée par**
une installation de pivotement (26) qui, lors du basculement rentrant de la flèche (8), bascule vers l'intérieur la roue de roulement (17) du châssis (7) vers la flèche (8).

4. Machine de fenaison selon l'une des revendications 1 à 3,
**caractérisée en ce que**
la flèche (8) comporte au moins un accumulateur de force entre le châssis (7) et la flèche (8).

5. Machine de fenaison selon la revendication 4,
**caractérisée en ce que**
l'accumulateur de force est installé pour qu'en position de travail et de fonctionnement la flèche (8) soit soumise à un couple réduisant la force d'appui sur la roue de roulement (17).

6. Machine de fenaison selon l'une des revendications 4 ou 5,
**caractérisée en ce que**
l'accumulateur de force est un ressort de compression.

7. Machine de fenaison selon l'une des revendications 1 à 6,
**caractérisée par**
au moins un dispositif de réglage (15) entre le bras d'appui (10) et le bras d'appui d'extrémité (11), qui règle l'angle entre le bras d'appui (10) et le bras d'appui d'extrémité (11).

8. Machine de fenaison selon la revendication 7,
**caractérisée en ce que**
la force d'appui du rotor râteleur (13) sur le sol se règle par le dispositif de réglage (15).

9. Machine de fenaison selon l'une des revendications 7 ou 8,
**caractérisée en ce que**
le dispositif de réglage (15) est constitué principalement par un vérin hydraulique.

10. Machine de fenaison selon l'une des revendications 1 à 9,
**caractérisée par**
une suspension (19) soutenant la roue de roulement (17) de manière souple.

11. Machine de fenaison selon l'une des revendications 1 à 10,
**caractérisée en ce que**
la roue de roulement (17) est une roue articulée tirée.

12. Machine de fenaison selon l'une des revendications 1 à 11,
**caractérisée en ce que**
quatre rotors râteleurs (28, 29) selon une disposition principalement en forme de V dans la direction de déplacement (3), sont précédés par au moins deux autres rotors râteleurs (13) déterminant la largeur de travail maximale en position de travail et de fonctionnement, selon la direction de déplacement (3) et
la distance (A) des axes médians longitudinaux (31, 32) de deux rotors râteleurs (13, 28) situés l'un derrière l'autre, en amont et en aval d'un essieu de machine (4) non directeur, portant des roues (20), est inférieure à la distance (B) des axes médians longitudinaux verticaux (32, 33) de deux rotors râteleurs (28, 29) voisins dans la direction de déplacement (3).

13. Machine de fenaison selon la revendication 12,
**caractérisée en ce que**
la distance (A) des axes médians longitudinaux verticaux (31, 32) des deux rotors râteleurs (13, 28) disposés l'un derrière l'autre dans la direction de déplacement (3) en amont et en aval de l'essieu non directeur (4) de la machine, représente entre 40 et 100 % de la distance (B) des axes médians longitudinaux verticaux (32, 33) des deux rotors râteleurs voisins (28, 29).

14. Machine de fenaison selon l'une des revendications 12 ou 13,
**caractérisée en ce que**
les deux autres rotors râteleurs (13) sont en amont de l'essieu directeur (5) dans la direction de déplacement (3).

15. Machine de fenaison selon l'une des revendications 1 à 14,
**caractérisée en ce que**
la machine de fenaison (1) est une machine automotrice.

16. Machine de fenaison selon la revendication 15,
**caractérisée par**
une paire de rotors râteleurs (9) derrière l'essieu non directeur (4) de la machine, une autre paire de rotors râteleurs (28) entre l'essieu non directeur (4) et l'essieu directeur (5) de la machine et deux autres rotors râteleurs (13) en avant de l'essieu directeur (5) de la machine.

17. Machine de fenaison selon l'une des revendications 1 à 16,
**caractérisée en ce que**
la flèche (8) fait un angle aigu par rapport à l'axe médian longitudinal (6) de la machine en position de travail et de fonctionnement.

18. Machine de fenaison selon l'une des revendications 1 à 17,
**caractérisée en ce que**
chaque côté de la machine comporte des rotors râteleurs (13, 28, 29) l'un derrière l'autre dans la direction de déplacement (3) portés chacun par une flèche (8) s'appuyant sur le châssis (35) de la machine et formant avec celui-ci un angle aigu en position de travail et de fonctionnement, et pouvant être basculées vers l'intérieur.

19. Machine de fenaison selon l'une des revendications 1 à 18,
**caractérisée en ce que**
la distance (C) la plus courte entre l'autre rotor râteleur (13) et le rotor râteleur voisin (28) représente entre 10 % et 50 % du diamètre (D) de l'autre rotor râteleur (13).
